# EUROPÄISCHE PATENTANMELDUNG

(11) **EP 4 064 531 A2**
(43) Veröffentlichungstag der Anmeldung: **28.09.2022**
(21) Anmeldenummer: 22160413.5
(22) Anmeldetag: 07.03.2022
(51) Int. Cl.: H02K 11/33, H02K 1/18, H02K 9/06, H02K 16/00, H02K 7/14, H02K 3/52

(54) **LEITERPLATTE EINES ELEKTROMOTORS ZUM ANTRIEB EINES VENTILATORS UND VENTILATOR MIT EINER DERARTIGEN LEITERPLATTE**

(30) Priorität: 24.03.2021 DE 102021107356
(71) Anmelder: ebm-papst St. Georgen GmbH & Co. KG, 78112 St. Georgen (DE)
(72) Erfinder: BRUCKER, Tobias, 78730 Lauterbach (DE); GUPTA, Saurabh, 78112 St. Georgen (DE); LANGENECK, Gunter, 78056 Villingen-Schwenningen (DE); MAYER, Stefan, 78086 Brigachtal (DE); SIEGER, Tobias, 78187 Geisingen (DE)
(74) Vertreter: Staeger & Sperling Partnerschaftsgesellschaft mbB

(57) **Zusammenfassung**

Die Erfindung betrifft eine Leiterplatte eines Elektromotors zum Antrieb eines Ventilators, der einen Stator mit mehreren um eine Motorachse angeordneten Statorzähnen mit Statorwicklungen umfasst, zwischen denen jeweils eine Wicklungsnut ausgebildet ist, wobei die Leiterplatte als Ringteil ausgebildet ist, von dem ausgehend sich mehrere Anschlussstege senkrecht zur Motorachse nach radial außen erstrecken und die Wicklungsanschlüsse der Statorwicklungen elektrisch verbinden, wobei zwischen den Anschlussstegen jeweils frei durchströmbare Aussparungen ausgebildet sind, die geometrisch derart an eine Form der jeweiligen Wicklungsnuten angepasst ist, dass die Wicklungsnuten und die Aussparungen zusammen jeweils einen Strömungskanal für Kühlluft bilden.

## Beschreibung

Die Erfindung betrifft eine Leiterplatte eines Elektromotors beispielsweise zum Antrieb eines Ventilators sowie einen Ventilator mit einem Elektromotor zum Antrieb eines Ventilatorrades und mit einer entsprechenden Leiterplatte.

Aus dem Stand der Technik sind Leitplatten zur elektrischen Verbindung von Wicklungsanschlüssen von Statorwicklungen bekannt. Diese überdecken den Stator auf der axialen Seite, so dass die Kühlung und Ableitung von Wärme eingeschränkt ist. Bisher werden aktive Kühllungen vorgesehen, bei denen Kühlströme umgeleitet oder Prallscheiben eingesetzt werden.

Der Erfindung liegt die Aufgabe zugrunde, eine Leiterplatte bereit zu stellen, mit der eine interne Durchtströmung des Stators eines Elektromotors, insbesondere eines solchen zum Antrieb eines Ventilators, ermöglicht und somit eine günstige Entwärmung während des Betriebs des Elektromotors gewährleistet ist.

Diese Aufgabe wird durch die Merkmalskombination gemäß Patentanspruch 1 gelöst.

Erfindungsgemäß wird eine Leiterplatte eines Elektromotors, insbesondere zum Antrieb eines Ventilators, vorgeschlagen, der einen Stator mit mehreren um eine Motorachse angeordneten Statorzähnen mit Statorwicklungen und zugeordneten Wicklungsanschlüssen umfasst. Zwischen den Statorzähnen ist jeweils eine Wicklungsnut ausgebildet. Die Leiterplatte ist als Ringteil ausgebildet, von dem ausgehend sich mehrere Anschlussstege senkrecht zur Motorachse nach radial außen erstrecken und die Wicklungsanschlüsse der Statorwicklungen elektrisch verbinden. Zwischen den Anschlussstegen sind jeweils frei durchströmbare Aussparungen ausgebildet, die geometrisch derart an eine Form der jeweiligen Wicklungsnuten angepasst sind, dass die Wicklungsnuten und die Aussparungen zusammen jeweils einen Strömungskanal für Kühlluft bilden.

Die Leiterplatte ist mithin zum einen ausgebildet zur Herstellung der elektrischen Verbindung der Wicklungsanschlüsse des Stators zum anderen leistet sie einen Beitrag zur Motorentwärmung, da ihre Ausbildung eine axiale Durchströmung des Stators durch die Statornuten entlang der Statorwicklungen und weiter durch die Leiterplatte gewährleistet. Die Strömung kann dabei vorzugsweise ein Nebenstrom oder Bypassstrom der durch das Ventilatorrad des Ventilators erzeugten Hauptströmung sein. Zusätzliche Bauteile oder eigens vorzusehende Kühlräder, die mit dem Rotor mitrotieren, sind nicht nötig.

Eine Ausführungsvariante der Leiterplatte ist dadurch gekennzeichnet, dass an dem Ringteil ein Anschlussabschnitt ausgebildet ist, welcher einen elektrischen Anschluss der Leitplatte aufweist, wobei der Anschlussabschnitt jeweils mit einem Anschlusssteg jeweils einen Strömungskanal bildet. In dem Anschlussabschnitt werden die Einzelanschlüsse der Anschlussstege zusammengeführt. Der Anschlussabschnitt wird vorzugsweise in gleicher Weise wie einer der Anschlussstege ausgeführt, nur dass seine Fläche vergrößert ist. Dadurch kann er mit dem jeweils seitlich angrenzenden Anschlusssteg jeweils einen Strömungskanal bilden wie sie zwischen den übrigen Anschlussstegen vorgesehen sind.

Hierzu ist als günstiges Ausführungsbeispiel vorgesehen, dass ein zum jeweils benachbarten Anschlusssteg weisender Randabschnitt des Anschlussabschnitts eine geometrische Form entsprechend des angrenzenden Anschlussstegs aufweist, so dass die zwischen dem Anschlussabschnitt und den angrenzenden Anschlussstegen gebildeten Aussparungen eine identische Form aufweisen wie die Aussparungen zwischen jeweils zwei angrenzenden Anschlussstegen.

Ferner ist die Leiterplatte vorzugsweise derart ausgeführt, dass die Aussparungen zumindest abschnittsweise die gleiche geometrische Form aufweisen wie die Wicklungsnuten. Dies verbessert die axiale Durchströmbarkeit durch die Wicklungsnuten entlang der Motorachse, vorbei an den Motorwicklungen und weiter durch die Leiterplatte. Der Übergang zwischen Stator und Leiterplatte ist mithin strömungstechnisch optimiert.

Bei der Leiterplatte ist in einem günstigen Ausführungsbeispiel vorgesehen, dass die Anschlussstege jeweils einen sich von dem Ringteil aus erstreckenden Hals und einen sich daran anschließenden flächenmäßig gegenüber dem Hals vergrößerten Kopf aufweisen, wobei in dem Kopf jeweils eine Durchbrechung für die Wicklungsanschlüsse vorgesehen ist. Die Ausführung mit schmalem Hals und breiterem Kopf gibt der Leiterplatte im Bereich der Wicklungsanschlüsse mehr Material zur Verfügung, um trotz der vorzusehenden Durchbrechungen für die Wicklungsanschlüsse ausreichend Stabilität zu gewährleisten. Zudem trägt die Hals-Kopf-Ausführung zur günstigen Formgebung in der Nachbildung der Form der Wicklungszähne bei, so dass die Leiterplatte in diesem Bereich die gleiche geometrische Form aufweist wie die Wicklungsnuten des Stators.

Das Ringteil der Leiterplatte ist vorzugsweise als geschlossener Ring ausgebildet, der dadurch die nötige Steifigkeit des Bauteils gewährleistet.

Ferner sieht eine bevorzugte Ausführung der Leiterplatte vor, dass die Leiterplatte einstückig ausgebildet ist.

Die Erfindung umfasst neben der Leiterplatte des Elektromotors zudem einen Ventilator mit dem Elektromotor zum Antrieb eines Ventilatorrades und der Leiterplatte mit technischen Merkmalen wie vorstehend beschrieben. Der Ventilator weist einen Motorflansch auf, an welchem der Stator befestigt ist. Der Motorflansch umfasst in Umfangsrichtung um die Motorachse verteilt mehrere von Kühlluft frei durchströmbare Durchgänge, die in axialer Projektion entlang der Motorachse gesehen mit den Aussparungen der Leiterplatte und den Wicklungsnuten fluchten, so dass durch die Statorzähne des Stators, durch die Anschlussstege der Leiterplatte und durch Wandabschnitte der Durchgänge des Motorflansches Strömungskanäle zur Durchströmung für Kühlluft gebildet sind. Diese Lösung berücksichtigt mithin nicht nur die Leiterplatte und den Stator, sondern mit dem Motorflansch zudem das Bauteil des Ventilators, welches den Stator aufnimmt. Der Motorflansch umfasst in diesem Sinne jedes Bauteil, welches geeignet ist, den Stator befestigend aufzunehmen.

Die Leiterplatte ist in einer günstigen Ausführung entlang der Motorachse gesehen axial zwischen dem Motorflansch und dem Stator angeordnet.

Ferner ist der Ventilator ist einer Ausführungsvariante dadurch gekennzeichnet, dass die Leiterplatte unmittelbar auf den Statorzähnen befestigt ist.

Der Ventilator ist in einer vorteilhaften Ausführungsvariante ausgebildet als Axialventilator mit einem Axiallaufrad, das im Betrieb eine Hauptluftströmung und eine Nebenluftströmung oder Bypassströmung als Kühlluftstrom durch die Strömungskanäle erzeugt. Hierzu können beispielsweise im Rotor und dem Axiallaufrad Strömungsdurchgänge vorgesehen sein, welche Teile der von dem Axiallaufrad im Betrieb erzeugten Hauptströmung als Kühlluft zur Motorentwärmung durch die Strömungskanäle leitet.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein erstes Ausführungsbeispiel einer Leiterplatte;
- Fig. 2: ein zweites Ausführungsbeispiel einer Leiterplatte;
- Fig. 3: eine Explosionsdarstellung von Ventilator- und Motorbauteilen unter Nutzung der Leiterplatte aus Fig. 2;
- Fig. 4: die Ventilator- und Motorbauteile aus Fig. 3 im montierten Zustand
- Fig. 5: einen Axialventilator mit den Ventilator- und Motorbauteilen aus Fig. 4.

Die Figuren sind beispielhaft schematisch. Gleiche Bezugszeichen in den Figuren weisen auf gleiche funktionale und/oder strukturelle Merkmale hin.

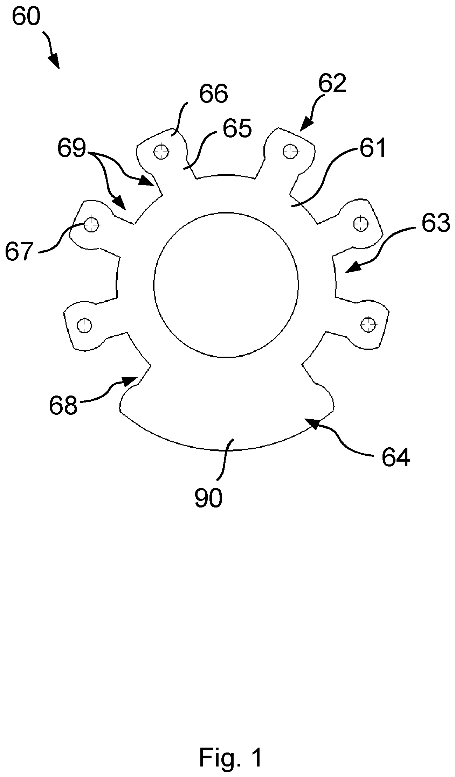

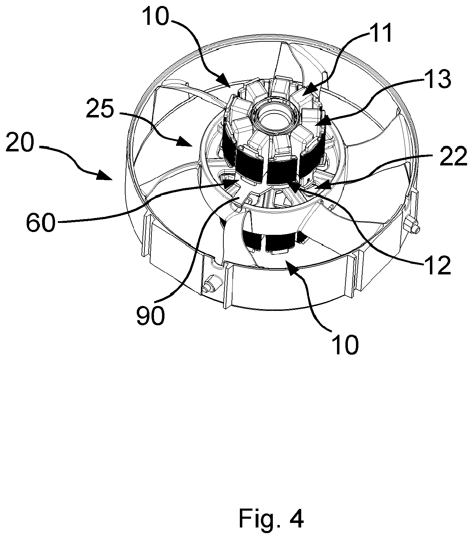

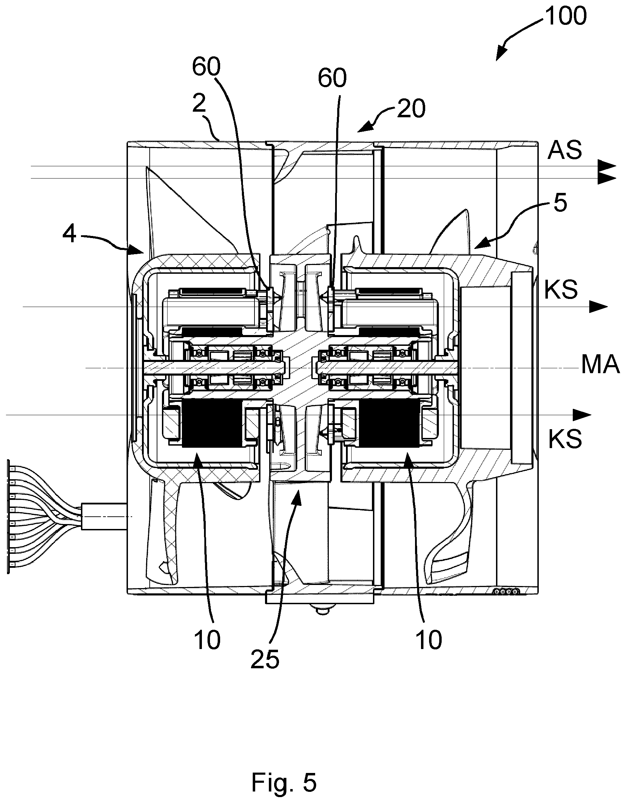

In Figur 1 ist ein erstes Ausführungsbeispiel einer einstückigen Leiterplatte 60 in einer axialen Draufsicht dargestellt. Die Leiterplatte 60 umfasst einen als durchgängigen Ring ausgebildetes Ringteil 61, von dem aus sich sechs gleich geformte Anschlussstege 62 nach radial außen erstrecken. Die Anschlussstege 62 sind jeweils gebildet durch einen sich an das Ringteil 61 anschließenden Hals 65 und einen sich daran anschließenden Kopf 66. Der Kopf 66 ist gegenüber dem Hals 65 jeweils flächenmäßig vergrößert und weist zentral jeweils eine Durchbrechung 67 zum Durchstecken und Fixieren von Wicklungsanschlüssen (Anschlusspins) eines Stators 10 (siehe Figur 4, 5) auf. Ebenfalls an dem Ringteil 61 ist der Anschlussabschnitt 64 ausgebildet, der den elektrischen Anschluss 90 der Leitplatte 60 umfasst. Zwischen den Anschlussstegen 62 sind jeweils frei durchströmbare Aussparungen 63 ausgebildet, die geometrisch an die Form der Wicklungsnuten 13 des Stators 10 angepasst sind. Hierzu sind die Randabschnitte 69 der Anschlussstege 62 und die Randabschnitte 68 des Anschlussabschnitts 64 mit der entsprechenden Formgebung und Kantenführung versehen.

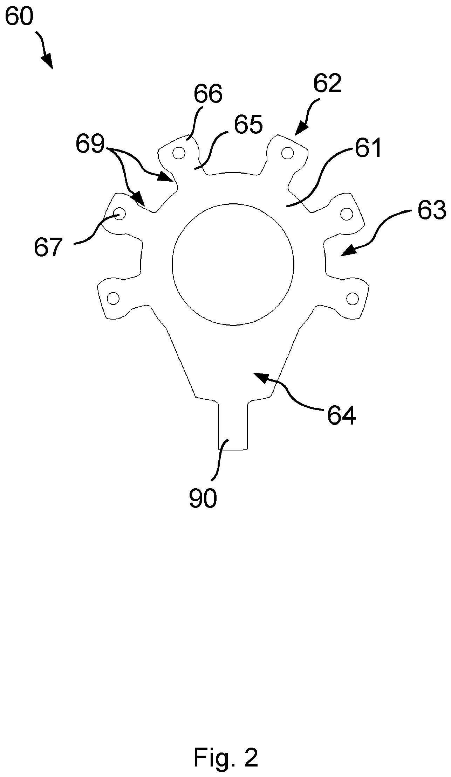

Figur 2 zeigt ein weiteres Ausführungsbeispiel einer Leiterplatte 60 mit den Merkmalen der Ausführung aus Figur 1, jedoch ohne dass der Anschlussabschnitt 64 entsprechend der Anschlussstege 62 geformt ist. Der Anschlussabschnitt 64 ist dabei flächenmäßig verkleinert und erstreckt sich weniger weit in Umfangsrichtung als bei der Ausführung gemäß Figur 1.

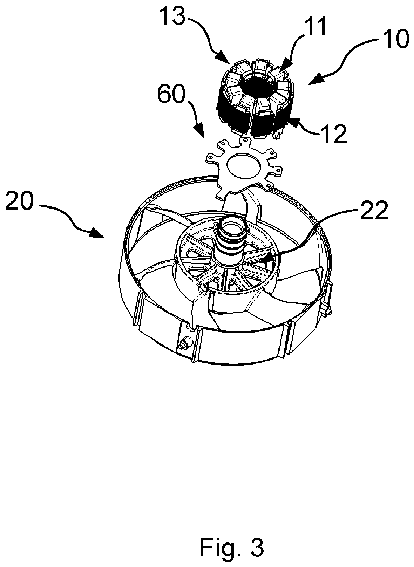

In Figur 3 ist als Explosionsdarstellung die Anordnung der Leiterplatte 60 aus Figur 2 an einem Motorflansch 20 und einem Stator 10 dargestellt. Figur 4 zeigt dieselbe Anordnung im montierten Zustand. Anstelle der Leiterplatte 60 aus Figur 2 kann natürlich auch diejenige aus Figur 1 eingesetzt werden. Als Motorflansch 20 dient vorliegend beispielhaft ein Zwischenteil eines Axialventilators wie in Figur 5 gezeigt, es können jedoch beliebige Ausführungen von Flanschausführungen verwendet werden, welche die nachstehend beschriebene Konfiguration aufweisen. Der Stator 10 des Elektromotors wird an dem Motorflansch 20 befestigend gehalten. Axial zwischen dem Motorflansch 20 und dem Stator 10 ist die Leiterplatte 60 an den Wicklungsanschlüssen des Stators 10 befestigt. Der elektrische Anschluss 90 der Leiterplatte 60 wird seitlich ausgeleitet. Die frei durchströmbaren Aussparungen 63 zwischen den Anschlussstegen 62 bilden zusammen mit den Wicklungsnuten 13 jeweils einen frei durchströmbaren Strömungskanal für Kühlluft, da die Aussparungen 63 im Wesentlichen die gleiche geometrische Form aufweisen wie die Wicklungsnuten 13. Zudem sind an einem den Stator haltenden Mittelteil 25 des Motorflansches 20 in Umfangsrichtung verteilt die Durchgänge 22 vorgesehen, welche in axialer Projektion überlappend zu den Wicklungsnuten 13 des Stators 10 und Aussparungen 63 der Leiterplatte 60 liegen, so dass Strömungskanäle für Kühlluft durch all drei Bauteile und insbesondere entlang des Stators 10 und der Leiterplatte 60 zur Motorentwärmung bereitgestellt sind. Der Motorflansch 20 ist auf beiden Axialseiten identisch ausgebildet und kann somit auch zwei Statoren 10 halten.

In Figur 5 ist ein Axialventilator 100 in einer seitlichen Schnittansicht in einer Ausführung mit zwei Motoren und zwei Ventilatorrädern 4, 5 dargestellt. Der Axialventilator 100 umfasst ein Gehäuse 2, durch welches die Ventilatorräder 4, 5 im Betrieb eine Hauptströmung AS erzeugen. Der als Zwischenteil ausgebildete Motorflansch 20 aus Figur 4 ist axial zwischen den beiden Ventilatorrädern 4, 5 angeordnet und hält die beiden Statoren 10. Axial zwischen den Statoren 10 und dem Motorflansch 20 sind die Leiterplatten 60 positioniert. Die Ventilatorräder 4, 5 umfassen Durchströmungsöffnungen, so dass neben der Hauptströmung AS ein Teil der angesaugten Luft durch die Strömungskanäle gebildet aus den Wicklungsnuten 13 der Statoren 10, den Aussparungen 63 der Leiterplatten 60 und den Durchgängen 22 im Motorflansch 20 als kühlende Nebenluftströmung KS zur Motorentwärmung strömen kann. Eine weitere Leiterplatte mit Elektronikbauteile zur Motorsteuerung wird gesondert angeordnet. Der gezeigte Axialventilator 100 ist nur ein Beispiel, es können auch andere Ventilatorbauformen wie Axialventilatoren mit nur einem Motor und nur einem Ventilatorrad, Radialventilatoren oder Diagonalventilatoren eingesetzt werden, bei denen die Durchströmbarkeit der Leiterplatte 60, des Stators 10 und des Motorflansches 20 entsprechend in axialer Projektion entlang der Motorachse MA umgesetzt sind, so dass die Strömungskanäle zur Motorentwärmung entsprechend gebildet sind.

## Patentansprüche

1. Leiterplatte (60) eines Elektromotors, der einen Stator (10) mit mehreren um eine Motorachse angeordneten Statorzähnen (11) mit Statorwicklungen (12) und zugeordneten Wicklungsanschlüssen umfasst, wobei zwischen den Statorzähnen (11) jeweils eine Wicklungsnut (13) ausgebildet ist, wobei die Leiterplatte (60) als Ringteil (61) ausgebildet ist, von dem ausgehend sich mehrere Anschlussstege (62) senkrecht zur Motorachse nach radial außen erstrecken und die Wicklungsanschlüsse der Statorwicklungen (12) elektrisch verbinden, wobei zwischen den Anschlussstegen (62) jeweils frei durchströmbare Aussparungen (63) ausgebildet sind, die geometrisch derart an eine Form der jeweiligen Wicklungsnuten (13) angepasst sind, dass die Wicklungsnuten (13) und die Aussparungen (63) zusammen jeweils einen Strömungskanal für Kühlluft bilden.

2. Leiterplatte nach Anspruch 1, **dadurch gekennzeichnet, dass** an dem Ringteil (61) ein Anschlussabschnitt (64) ausgebildet ist, welcher einen elektrischen Anschluss der Leitplatte (60) aufweist, wobei der Anschlussabschnitt (64) jeweils mit einem Anschlusssteg (62) jeweils einen Strömungskanal bildet.

3. Leiterplatte nach Anspruch 2, **dadurch gekennzeichnet, dass** ein zum jeweils benachbarten Anschlusssteg (62) weisender Randabschnitt (68) des Anschlussabschnitts (64) eine geometrische Form entsprechend des angrenzenden Anschlussstegs (62) aufweist, so dass die zwischen dem Anschlussabschnitt (64) und den angrenzenden Anschlussstegen (62) gebildeten Aussparungen (63) eine identische Form aufweisen wie die Aussparungen (63) zwischen jeweils zwei angrenzenden Anschlussstegen (62).

4. Leiterplatte nach einem der vorigen Ansprüche, **dadurch gekennzeichnet, dass** die Aussparungen (63) zumindest abschnittsweise die gleiche geometrische Form aufweisen wie die Wicklungsnuten.

5. Leiterplatte nach einem der vorigen Ansprüche, **dadurch gekennzeichnet, dass** die Anschlussstege (62) jeweils einen sich von dem Ringteil (61) aus erstreckenden Hals (65) und einen sich daran anschließenden flächenmäßig gegenüber dem Hals (65) vergrößerten Kopf (66) aufweisen, wobei in dem Kopf (66) jeweils eine Durchbrechung (67) für die Wicklungsanschlüsse vorgesehen ist.

6. Leiterplatte nach einem der vorigen Ansprüche, **dadurch gekennzeichnet, dass** das Ringteil (61) als geschlossener Ring ausgebildet ist.

7. Leiterplatte nach einem der vorigen Ansprüche, **dadurch gekennzeichnet, dass** die Leiterplatte (60) einstückig ausgebildet ist.

8. Ventilator (100) mit einem Elektromotor zum Antrieb eines Ventilatorrades und mit einer Leiterplatte (60) nach einem der vorigen Ansprüche, wobei der Ventilator einen Motorflansch (20) aufweist, an welchem der Stator (10) befestigt ist, wobei der Motorflansch (20) in Umfangsrichtung um die Motorachse (MA) verteilt mehrere von Kühlluft frei durchströmbare Durchgänge (22) aufweist, die in Projektion entlang der Motorachse (MA) gesehen mit den Aussparungen (63) der Leiterplatte (60) und den Wicklungsnuten (13) des Stators (10) fluchten, so dass durch die Statorzähne (11) des Stators (10), die Anschlussstege (62) der Leiterplatte (60) und durch Wandabschnitte der Durchgänge (22) des Motorflansches (20) durchgängige Strömungskanäle zur Durchströmung für Kühlluft gebildet sind.

9. Ventilator nach dem vorigen Anspruch, **dadurch gekennzeichnet, dass** die Leiterplatte (60) unmittelbar auf den Statorzähnen (11) befestigt ist.

10. Ventilator nach einem der vorigen Ansprüche 8 oder 9, ausgebildet als Axialventilator mit einem Axiallaufrad (4, 5), das im Betrieb eine Hauptluftströmung (AS) und eine Nebenluftströmung (KS) als Kühlluftstrom durch die Strömungskanäle erzeugt.

11. Ventilator nach einem der vorigen Ansprüche 8 bis 10, **dadurch gekennzeichnet, dass** die Leiterplatte (60) entlang der Motorachse (MA) gesehen axial zwischen dem Motorflansch (20) und dem Stator (10) angeordnet ist.
